# EUROPEAN PATENT SPECIFICATION

(11) **EP 4 646 543 B1**
(45) Date of publication and mention of the grant of the patent: **02.12.2026**
(21) Application number: 23836807.0
(22) Date of filing: 20.12.2023
(51) Int. Cl.: F16L 5/04, F16L 5/08

(54) **METHOD AND SEALING ARRANGEMENT FOR SEALING A BLAST RESISTANT WALL SLEEVE**
VERFAHREN UND DICHTUNGSANORDNUNG ZUM ABDICHTEN EINER EXPLOSIONSSICHEREN WANDMUFFE
PROCÉDÉ ET AGENCEMENT D'ÉTANCHÉITÉ POUR SCELLER UN MANCHON DE PAROI RÉSISTANT AUX EXPLOSIONS

(30) Priority: 04.01.2023 FI 20235010
(43) Date of publication of application: 12.11.2025
(73) Proprietor: Temet Finland Oy, 02270 Espoo (FI)
(72) Inventor: VÄISTÖ, Harri, 02260 Espoo (FI); NIEMI, Timo, 40200 Jyväskylä (FI)
(74) Representative: Boco IP Oy Ab
(86) International application number: PCT/EP2023/086999
(87) International publication number: WO 2024/146808

(56) References cited:
- DE-U1- 8 027 058
- DE-U1- 9 318 092

## Description

### Field of the invention

The invention relates to a method for sealing a blast resistant wall sleeve extending through a wall of a building as defined in the preamble of independent claim 1.

The invention also relates to a sealing arrangement for sealing a blast resistant wall sleeve extending through a wall of a building as defined in the preamble of independent claim 8.

The blast resistant wall sleeve can be a blast resistant and gastight wall sleeve leading into a hardened civil defence or military shelter. Sealing arrangements and methods are known from DE9318092U1 and DE8027058U1.

### Objective of the invention

The object of the invention is to provide an improved method and sealing arrangement for sealing a blast resistant wall sleeve.

### Short description of the invention

The method for sealing a blast resistant wall sleeve extending through a wall of a building of the invention is characterized by the definitions of independent claim 1.

Preferred embodiments of the method are defined in the dependent claims 2 to 7.

The sealing arrangement for sealing a blast resistant wall sleeve extending through a wall of a building of the invention is correspondingly characterized by the definitions of independent claim 8.

Preferred embodiments of the sealing arrangement are defined in the dependent claims 9 to 14.

### List of figures

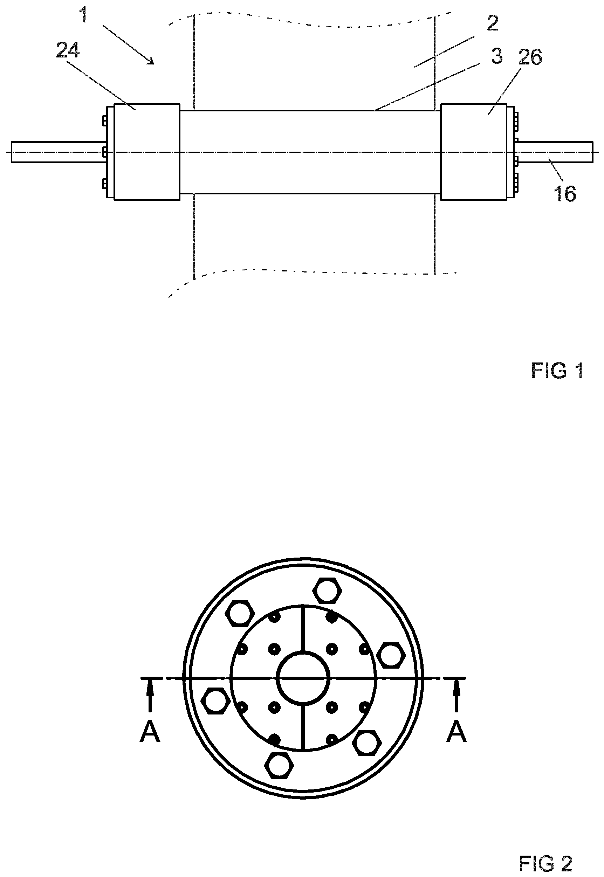

In the following the invention will described in more detail by referring to the figures, of which
Figure 1 shows an embodiment of the method and the sealing arrangement for sealing a blast resistant wall sleeve extending through a wall of a building,
Figure 2 shows the embodiment shown in figure 1 as seen from one end,

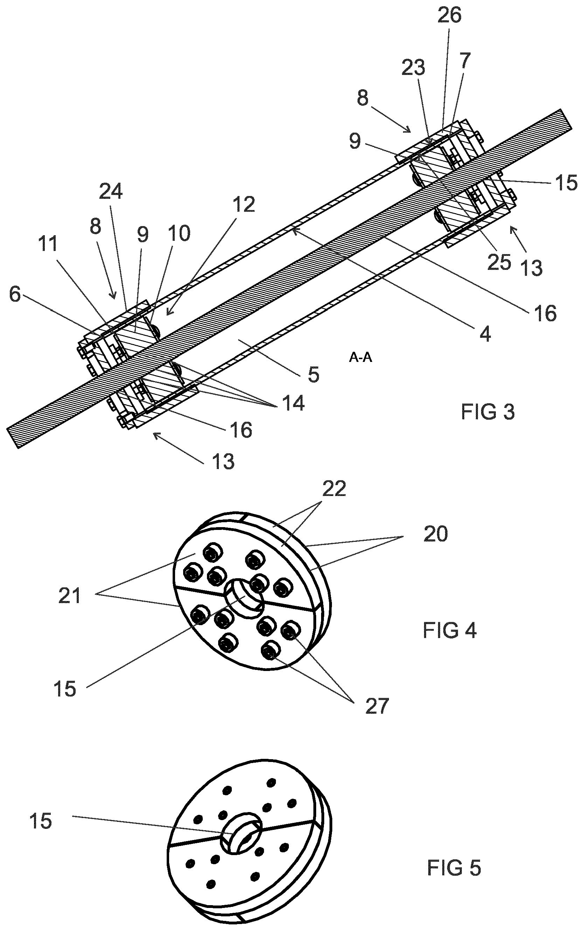

Figure 3 shows the embodiment shown in figure 1 as cut along plane A-A in figure 2,
Figures 4 and 5 shows the plate arrangement of the embodiment shown in figure 1,

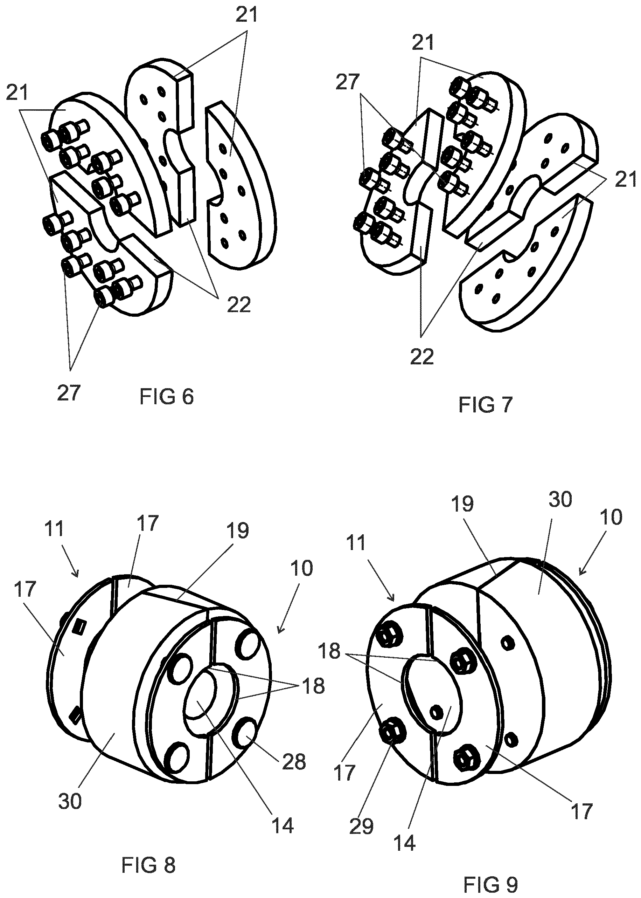

Figures 6 and 7 shows the plate arrangement of the embodiment shown in figure 1 in exploded view, and
Figures 8 and 9 shows the sealing means of the embodiment shown in figure 1 in exploded view.

### Detailed description of the invention

First the method for sealing a blast resistant wall sleeve 1 extending through a wall 2 of a building (not marked with a reference numeral) and some embodiments and variants of the method will be described in greater detail.

In the method, the blast resistant wall sleeve 1 comprise a channel member 3 having an inner surface 4 limiting a channel 5 extending through the blast resistant wall sleeve 1 so that the channel 5 has an upstream end 6 and a downstream end 7.

The method comprises arranging at least one sealing means 8 in the channel 5, wherein said at least one sealing means 8 comprising a sealing member 9 of elastic material in the channel 5, a first plate 10 in the channel 5 downstream of the sealing member 9, a second plate 11 in the channel 5 upstream of the sealing member 9, and pressing means 12 configured to press the first plate 10 and second plate 11 towards each other. The embodiment illustrated in the figures comprises two sealing means 8.

The method comprises pressing the sealing member 9 with the pressing means 12 between the first plate 10 and second plate 11 so that the sealing member 9 presses against the inner surface 4 of the channel member 3 so as to seal the channel 5, i.e. to prevent fluids such as gas to flow in the channel 5 from an upstream side of the sealing member 9 to a downstream side of the sealing member 9.

The method comprises closing the upstream end 6 of the channel 5 of the channel member 3 by providing a plate arrangement 13 at the upstream end 6 of the channel 5 of the channel member 3 and/or comprises closing the downstream end 7 of the channel 5 of the channel member 3 by providing a plate arrangement 13 at the downstream end 7 of the channel 5 of the channel member 3. A purpose of the plate arrangement 13 can be to provide for blast protection or to provide for blast fragment protection.

In the method the channel 5 of the channel member 3 can simply be sealed and closed by means of the sealing means 8 and the plate arrangement(s) 13.

Some embodiments of the method comprises, as illustrated in the embodiment presented in the figures, providing each of the sealing member 9, the first plate 10, and the second plate 11 with a first through hole 14. Such embodiments comprises arranging a cable 16, pipe, or the like that is arranged in the channel 5 of the channel member 3 to pass through the first through holes 14 in sealing member 9, in the first plate 10, and in the second plate 11, pressing the sealing member 9 between the first plate 10 and second plate 11 so that the sealing member 9 presses against the cable 16, pipe, or the like in the first through hole 14 of the sealing member 9, and providing both the plate arrangement(s) 13 with a second through hole 15, and arranging the cable 16, pipe, or the like that is arranged in the channel 5 of the channel member 3 to pass through the second through holes 15 in the plate arrangement(s) 13. Such embodiment can comprise providing the first through hole 14 in the first plate 10 and in the second plate 11 by forming both the first plate 10 and the second plate 11 by at least two first separate plate members 17 each having a first surrounding side edge 18 so that the first through hole is formed between the first surrounding side edges 18 of said at least two first separate plate members 17. This is especially an advantage if the cable 16, pipe, or the like is already arranged in the channel 5 of the channel member 3, because the cable 16, pipe, or the like need not for example to be cut to arrange the cable 16, pipe, or the like to pass through the first through holes 14 in the first plate 10 and in the second plate 11. Such embodiment can comprise providing the sealing member 9 with a slit 19 that extends between a circumferential surface 30 of the sealing member 9 and the first through hole 14 of the sealing member 9, and arranging the cable 16, pipe, or the like to pass through the first through hole 14 in the sealing member 9 by moving the sealing member 9 to surround the cable 16, pipe, or the like via the slit 19. This is especially an advantage if the cable 16, pipe, or the like is already arranged in the channel 5 of the channel member 3, because the cable 16, pipe, or the like need not for example to be cut to arrange the cable 16, pipe, or the like to pass through the first through hole 14 in the sealing member 9. Such embodiment can comprise providing the plate arrangement(s) 13 to comprise at least two separate plate layers 20 each having a second through hole 15, providing the second through hole 15 in each of said at least two separate plate layers 20 by forming each of said at least two separate plate layers 20 of at least two second separate plate members 21 each having a second surrounding side edge 22 so that the second through hole is in each of said at least two separate plate layers 20 formed between the second surrounding side edges 22 of said at least two second separate plate members 21, and arranging said at least two separate plate members in each of said at least two separate plate layers 20 so that second surrounding side edges 22 in adjacent separate plate layers 20 are unaligned so as to provide a tighter and more durable structure. This is especially an advantage if the cable 16, pipe, or the like is already arranged in the channel 5 of the channel member 3, because the cable 16, pipe, or the like need not for example to be cut to arrange the cable 16, pipe, or the like to pass through the second through holes 15 in the first plate arrangement(s) 13. If the method comprises providing the first plate arrangement(s) 13 to comprise at least two separate plate layers 20 each having a second through hole 15 as presented, the method comprises preferably, but not necessarily, attaching said at least two separate plate layers 20 to each other by means of fastening means such as bolts 27 and nuts extending through said at least two separate plate layers 20.

The method comprises preferably, but not necessarily, providing the pressing means 12 in the form of headed bolts 28 extending through each of the sealing member 9, the first plate 10, and the second plate 11, and in the form of nuts 29 on threads of the headed bolts 28, and pressing the sealing member 9 with the pressing means 12 between the first plate 10 and second plate 11 so that the sealing member 9 presses against the inner surface 4 of the channel member 3 by pressing the sealing member 9 between the first plate 10 and second plate 11 by pressing the sealing member 9, the first plate 10, and the second plate 11 between heads of the headed bolts 28 and the nuts 29 threaded on the headed bolts 28.

The method comprises preferably, but not necessarily, providing the channel member 3 with an outer threading 23 at the upstream end 6 and at the downstream end 7, providing a first socket 24 having an inner threading 25 at the outer threading 23 at the upstream end 6 and providing a second socket 26 having an inner threading 25 at the outer threading 23 at the downstream end 7, and the method comprises preferably, but not necessarily, providing the plate arrangement 13 at the upstream end 6 of the channel 5 of the channel member 3 by pressing the plate arrangement 13 between the upstream end 6 of the channel 5 of the channel member 3 and the first socket 24, and/or providing the plate arrangement 13 at the downstream end 7 of the channel 5 of the channel member 3 by pressing the plate arrangement 13 between the downstream end 7 of the channel 5 of the channel member 3 and the second socket 26.

Next the sealing arrangement for a blast resistant wall sleeve 1 extending through a wall 2 of a building and some embodiments and variants of the sealing arrangement will be described in greater detail.

The blast resistant wall sleeve 1 comprising a channel member 3 having an inner surface 4 limiting a channel 5 extending through the blast resistant wall sleeve 1.

The sealing arrangement comprises at least one sealing means 8 in the channel 5, wherein said at least one sealing means 8 comprising a sealing member 9 of elastic material in the channel 5, a first plate 10 in the channel 5 downstream of the sealing member 9, a second plate 11 in the channel 5 upstream of the sealing member 9. The embodiment illustrated in the figures comprises two sealing means 8.

The sealing means 8 comprises pressing means 12 configured to press the first plate 10 and second plate 11 towards each other so that the sealing member 9 is pressed between the first plate 10 and second plate 11 so that the sealing member 9 presses against the inner surface 4 of the channel member 3 so as to seal the channel 5, i.e. to prevent fluids such as gas to flow in the channel 5 from an upstream side of the sealing member 9 to a downstream side of the sealing member 9.

The sealing arrangement comprises a plate arrangement 13 at the upstream end 6 of the channel 5 of the channel member 3 configured to close the upstream end 6 of the channel 5 of the channel member 3 and/or a plate arrangement at the downstream end 7 of the channel 5 of the channel member 3 configured to close the downstream end 7 of the channel 5 of the channel member 3. A purpose of the plate arrangement(s) 13 can be to provide for blast protection or to provide for blast fragment protection.

In the arrangement the channel 5 of the channel member 3 can simply be sealed and closed by means of the sealing means 8 and the first plate arrangement(s) 13.

In some embodiments of the sealing arrangement, each of the sealing member 9, the first plate 10, and the second plate 11 is preferably, but not necessarily, as in the embodiment illustrated in the figures, provided with a first through hole 14. In such embodiments of the sealing arrangement a cable 16, pipe, or the like that is arranged in the channel 5 of the channel member 3 is arranged to pass through the first through hole 14 in the sealing member 9, in the first plate 10, and in the second plate 11, the sealing member 9 being pressed between the first plate 10 and second plate 11 so that the sealing member 9 presses against the cable 16, pipe, or the like, in the first through hole 14 in the sealing member 9, the plate arrangement(s) 13 is/are provided with a second through hole 15, and the cable 16, pipe, or the like that is arranged in the channel 5 of the channel member 3 is arranged to pass through the second through holes 15 in the plate arrangement(s) 13. In such embodiments of the sealing arrangement, the first through hole 14 in the first plate 10 and in the second plate 11 can both in the first plate 10 and in the second plate be formed by at least two first separate plate members 17 each having a first surrounding side edge 18 so that the first through hole 14 is formed between the first surrounding side edges 18 of said at least two first separate plate members 17. This is especially an advantage if the cable 16, pipe, or the like is already arranged in the channel 5 of the channel member 3, because the cable 16, pipe, or the like need not for example to be cut to arrange the cable 16, pipe, or the like to pass through the first through holes 14 in the first plate 10 and in the second plate 11. In such embodiments of the sealing arrangement, the sealing member 9 can be provided with a slit 19 that extends between a circumferential surface 30 of the sealing member 9 and the first through hole 14 of the sealing member 9. This is especially an advantage if the cable 16, pipe, or the like is already arranged in the channel 5 of the channel member 3, because the cable 16, pipe, or the like need not for example to be cut to arrange the cable 16, pipe, or the like to pass through the first through hole 14 in the sealing member 9. In such embodiments of the sealing arrangement, the plate arrangement(s) 13 can comprise at least two separate plate layers 20 each having a second through hole 15 and the second through hole 15 can in each of said at least two separate plate layers 20 be formed so that each of said at least two separate plate layers 20 comprise at least two second separate plate members 21 each having a second surrounding side edge 22 so that the second through hole 15 is in each of said at least two separate plate layers 20 formed between the second surrounding side edges 22 of said at least two second separate plate members 21, and said at least two separate plate members can be arranged in each of said at least two separate plate layers 20 so that second surrounding side edges 22 in adjacent separate plate layers 20 are unaligned so as to provide a tighter and more durable structure. This is especially an advantage if the cable 16, pipe, or the like is already arranged in the channel 5 of the channel member 3, because the cable 16, pipe, or the like need not for example to be cut to arrange the cable 16, pipe, or the like to pass through the second through holes 15 in the plate arrangement(s) 13.

If the method comprise providing the plate arrangement(s) 13 to comprise at least two separate plate layers 20 each having a second through hole 15 and each having at least two first separate plate members 17 each having a first surrounding side edge 18 as presented, said at least two separate plate layers 20 are preferably, but not necessarily, attached to each other by means of fastening means such as bolts 27 and nuts extending through said at least two separate plate layers 20.

The pressing means 12 comprises preferably, but not necessarily, as in the embodiment illustrated in the figures, headed bolts 28 extending through each of the sealing member 9, the first plate 10, and the second plate 11 and nuts 29 on threads of the headed bolts 28, wherein the sealing member 9 being between the first plate 10 and second plate 11 so that the sealing member 9, the first plate 10, and the second plate 11 being pressed between heads of the headed bolts 28 and the nuts 29 threaded on the headed bolts 28.

The channel member 3 is preferably, but not necessarily, provided with an outer threading 23 at the upstream end 6 and the downstream end 7, and a first socket 24 having an inner threading 25 is preferably, but not necessarily, provided at the outer threading 23 at the upstream end 6, and a second socket 26 having an inner threading 25 is preferably, but not necessarily, provided at the outer threading 23 at the downstream end 7, so that the plate arrangement 13 at the upstream end 6 of the channel 5 of the channel member 3 is pressed between the upstream end 6 of the channel 5 of the channel member 3 and the first socket 24, and/or so that the plate arrangement 13 at the downstream end 7 of the channel 5 of the channel member 3 is pressed between the downstream end 7 of the channel 5 of the channel member 3 and the second socket 26.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for sealing a blast resistant wall sleeve (1) extending through a wall (2) of a building, wherein the blast resistant wall sleeve (1) comprising a channel member (3) having an inner surface (4) limiting a channel (5) extending through the blast resistant wall sleeve (1) so that the channel (5) has an upstream end (6) and a downstream end (7),
wherein the method comprising
arranging at least one sealing means (8) in the channel (5), wherein said at least one sealing means (8) comprising a sealing member (9) of elastic material in the channel (5), a first plate (10) in the channel (5) downstream of the sealing member (9), a second plate (11) in the channel (5) upstream of the sealing member (9), and pressing means (12) configured to press the first plate (10) and second plate (11) towards each other,
pressing the sealing member (9) with the pressing means (12) between the first plate (10) and second plate (11) so that the sealing member (9) presses against the inner surface (4) of the channel member (3), and
closing the upstream end (6) of the channel (5) of the channel member (3) by providing a plate arrangement (13) at the upstream end (6) of the channel (5) of the channel member (3) and/or by closing the downstream end (7) of the channel (5) of the channel member (3) by providing a plate arrangement (13) at the downstream end (7) of the channel (5) of the channel member (3),
**characterized**
**by** providing the channel member (3) with an outer threading (34) at the upstream end (6) and at the downstream end (7),
by providing a first socket (24) with an inner threading (25) at the outer threading (23) at the upstream end (6) and providing a second socket (26) with an inner threading (25) at the outer threading (23) at the downstream end (7), and
by providing the plate arrangement (13) at the upstream end (6) of the channel (5) of the channel member (3) by pressing the plate arrangement (13) between the upstream end (6) of the channel (5) of the channel member (3) and the first socket (24), and/or by providing the plate arrangement (13) at the downstream end (7) of the channel (5) of the channel member (3) by pressing the plate arrangement (13) between the downstream end (7) of the channel (5) of the channel member (3) and the second socket (26).

2. The method according to claim 1, **characterized**
**by** providing each of the sealing member (9), the first plate (10), and the second plate (11) with a first through hole (14),
by arranging a cable (16), pipe, or the like that is arranged in the channel (5) of the channel member (3) to pass through the first through holes (14) in the sealing member (9), in the first plate (10), and in the second plate (11),
by pressing the sealing member (9) between the first plate (10) and second plate (11) so that the sealing member (9) presses against the cable (16), pipe, or the like in the first through hole (14) of the sealing member (9),
by providing the plate arrangement(s) (13) with a second through hole (15), and
by arranging the cable (16), pipe, or the like that is arranged in the channel (5) of the channel member (3) to pass through the second through hole (15) in the plate arrangement(s) (13).

3. The method according to claim 2, **characterized**
**by** providing the first through hole (14) in the first plate (10) and in the second plate (11) by forming both the first plate (10) and the second plate (11) of at least two first separate plate members (17) each having a first surrounding side edge (18) so that the first through hole is formed between the first surrounding side edges (18) of said at least two first separate plate members (17).

4. The method according to claim 2 or 3, **characterized**
**by** providing the sealing member (9) with a slit (19) that extends between a circumferential surface (30) of the sealing member (9) and the first through hole (14) of the sealing member (9), and
by arranging the cable (16), pipe, or the like to pass through the first through hole (14) in the sealing member (9) by moving the sealing member (9) to surround the cable (16), pipe, or the like via the slit (19).

5. The method according to any of the claims 2 to 4, **characterized**
**by** providing the plate arrangement(s) (13) to comprise at least two separate plate layers (20) each having a second through hole (15),
by providing the second through hole (15) in each of said at least two separate plate layers (20) by forming each of said least two separate plate layers (20) of at least two second separate plate members (21) each having a second surrounding side edge (22) so that the second through hole (15) is in each of said least two separate plate layers (20) formed between the second surrounding side edges (22) of said at least two second separate plate members (21), and
by arranging said least two separate plate members in each of said at least two separate plate layers (20) so that second surrounding side edges (22) in adjacent separate plate layers (20) are unaligned.

6. The method according to claim 5, **characterized**
**by** attaching said least two separate plate layers (20) to each other by means of fastening means such as bolts (27) and nuts extending through said least two separate plate layers (20).

7. The method according to any of the claims 1 to 6, **characterized**
**by** providing the pressing means (12) in the form of headed bolts (28) extending through each of the sealing member (9), the first plate (10), and the second plate (11), and in the form of nuts (29) on threads of the headed bolts (28), and
by pressing the sealing member (9) with the pressing means (12) between the first plate (10) and second plate (11) so that the sealing member (9) presses against the inner surface (4) of the channel member (3) by pressing the sealing member (9) between the first plate (10) and second plate (11) by pressing the sealing member (9), the first plate (10), and the second plate (11) between heads of the headed bolts (28) and the nuts (29) threaded on the headed bolts (28).

8. A sealing arrangement for a blast resistant wall sleeve (1) extending through a wall (2) of a building, wherein the blast resistant wall sleeve (1) comprising a channel member (3) having an inner surface (4) limiting a channel (5) extending through the blast resistant wall sleeve (1),
wherein the sealing arrangement comprising
at least one sealing means (8) in the channel (5), wherein said at least one sealing means (8) comprising a sealing member (9) of elastic material in the channel (5), a first plate (10) in the channel (5) downstream of the sealing member (9), a second plate (11) in the channel (5) upstream of the sealing member (9),
said at least one sealing means (8) comprising pressing means (12) configured to press the first plate (10) and second plate (11) towards each other so that the sealing member (9) is pressed between the first plate (10) and second plate (11) so that the sealing member (9) presses against the inner surface (4) of the channel member (3), and
a plate arrangement (13) at the upstream end (6) of the channel (5) of the channel member (3) configured to close the upstream end (6) of the channel (5) of the channel member (3), and/or a plate arrangement (13) at the downstream end (7) of the channel (5) of the channel member (3) configured to close the downstream end (7) of the channel (5) of the channel member (3),
**characterized**
**by** the channel member (3) being provided with an outer threading (23) at the upstream end (6) and the downstream end (7),
by a first socket (24) with an inner threading (25) being provided at the outer threading (23) at the upstream end (6) and a second socket (26) with an inner threading (25) being provided at the outer threading (23) at the downstream end (7), and
by the plate arrangement (13) at the upstream end (6) of the channel (5) of the channel member (3) being pressed between the upstream end (6) of the channel (5) of the channel member (3) and the first socket (24) and/or the plate arrangement (13) at the downstream end (7) of the channel (5) of the channel member (3) being pressed between the downstream end (7) of the channel (5) of the channel member (3) and the second socket (26).

9. The sealing arrangement according to claim 8, **characterized**
**by** each of the sealing member (9), the first plate (10), and the second plate (11) being provided with a first through hole (14),
by a cable (16), pipe, or the like that is arranged in the channel (5) of the channel member (3) being arranged to pass through the first through holes (14) in the sealing member (9), in the first plate (10), and in the second plate (11),
by the sealing member (9) being pressed between the first plate (10) and second plate (11) so that the sealing member (9) presses against the cable (16), pipe, or the like in the first through hole (14) in the sealing member (9),
by the plate arrangement(s) (13) being provided with a second through hole (15), and
by the cable (16), pipe, or the like that is arranged in the channel (5) of the channel member (3) being arranged to pass through the second through hole (15) in the plate arrangement(s) (13).

10. The sealing arrangement according to claim 9, **characterized**
**by** the first through hole (14) in the first plate (10) and in the second plate (11) being both in the first plate (10) and in the second plate (11) formed of at least two first separate plate members (17) each having a first surrounding side edge (18) so that the first through hole (14) is formed between the first surrounding side edges (18) of said at least two first separate plate members (17).

11. The sealing arrangement according to claim 8 or 9, **characterized**
**by** the sealing member (9) being provided with a slit (19) that extends between a circumferential surface (30) of the sealing member (9) and the first through hole (14) of the sealing member (9).

12. The sealing arrangement according to any of the claims 10 to 11, **characterized**
**by** the plate arrangement(s) (13) comprising at least two separate plate layers (20) each having a second through hole (15),
by the second through hole (15) in each of said at least two separate plate layers (20) being formed so that each of said at least two separate plate layers (20) comprising at least two second separate plate members (21) each having a second surrounding side edge (22) so that the second through hole (15) is in each of said at least two separate plate layers (20) formed between the second surrounding side edges (22) of said at least two second separate plate members (21), and
by said at least two separate plate members being arranged in each of said at least two separate plate layers (20) so that second surrounding side edges (22) in adjacent separate plate layers (20) are unaligned.

13. The sealing arrangement according to claim 12, **characterized**
**by** said at least two separate plate layers (20) being attached to each other by means of fastening means such as bolts and nuts extending through said at least two separate plate layers (20).

14. The sealing arrangement according to any of the claims 8 to 13, **characterized**
**by** the pressing means (12) comprising headed bolts (28) extending through each of the sealing member (9), the first plate (10), and the second plate (11) and nuts (29) on threads of the headed bolts (28), and
by the sealing member (9) being between the first plate (10) and second plate (11) so that the sealing member (9), the first plate (10), and the second plate (11) being pressed between heads of the headed bolts (28) and the nuts (29) threaded on the headed bolts (28).

## Patentansprüche

1. Verfahren zum Abdichten einer explosionsbeständigen Wanddurchführung (1), die sich durch eine Wand (2) eines Gebäudes erstreckt, wobei die explosionsbeständige Wanddurchführung (1) ein Kanalelement (3) mit einer Innenfläche (4) umfasst, die einen Kanal (5) begrenzt, der sich durch die explosionsbeständige Wanddurchführung (1) dergestalt erstreckt, dass der Kanal (5) ein anströmseitiges Ende (6) und ein abströmseitiges Ende (7) aufweist,
wobei das Verfahren umfasst:
Anordnen mindestens eines Abdichtungsmittels (8) im Kanal (5), wobei das mindestens eine Abdichtungsmittel (8) umfasst: ein Abdichtungselement (9) aus elastischem Material im Kanal (5), eine dem Abdichtungselement (9) abströmseitig nachgelagerte erste Platte (10) im Kanal (5), eine dem Abdichtungselement (9) anströmseitig vorgelagerte zweite Platte (11) im Kanal (5), und ein Anpressmittel (12), das dazu ausgelegt ist, die erste Platte (10) und die zweite Platte (11) aneinander zu pressen,
Anpressen des Abdichtungselements (9) mit dem Anpressmittel (12) zwischen der ersten Platte (10) und der zweiten Platte (11) dergestalt, dass sich das Abdichtungselement (9) an die Innenfläche (4) des Kanalelements (3) anpresst, und
Verschließen des anströmseitigen Endes (6) des Kanals (5) des Kanalelements (3) durch Vorsehen einer Plattenanordnung (13) am anströmseitigen Ende (6) des Kanals (5) des Kanalelements (3) und/oder Verschließen des abströmseitigen Endes (7) des Kanals (5) des Kanalelements (3) durch Vorsehen einer Plattenanordnung (13) am abströmseitigen Ende (7) des Kanals (5) des Kanalelements (3),
**gekennzeichnet**
**durch** Versehen des Kanalelements (3) mit einem Außengewinde (34) am anströmseitigen Ende (6) und am abströmseitigen Ende (7),
**durch** Vorsehen einer ersten Muffe (24) mit Innengewinde (25) am Außengewinde (23) am anströmseitigen Ende (6) und Vorsehen einer zweiten Muffe (26) mit Innengewinde (25) am Außengewinde (23) am abströmseitigen Ende (7), und
Vorsehen der Plattenanordnung (13) am anströmseitigen Ende (6) des Kanals (5) des Kanalelements (3) durch Anpressen der Plattenanordnung (13) zwischen dem anströmseitigen Ende (6) des Kanals (5) des Kanalelements (3) und der ersten Muffe (24), und/oder durch Vorsehen der Plattenanordnung (13) am abströmseitigen Ende (7) des Kanals (5) des Kanalelements (3) durch Anpressen der Plattenanordnung (13) zwischen dem abströmseitigen Ende (7) des Kanals (5) des Kanalelements (3) und der zweiten Muffe (26).

2. Verfahren nach Anspruch 1, **gekennzeichnet**
**durch** Versehen des Abdichtungselements (9), der ersten Platte (10) und der zweiten Platte (11) jeweils mit einem ersten Durchgangsloch (14),
**durch** Anordnen eines Kabels (16), Rohres oder dergleichen, das im Kanal (5) des Kanalelements (3) so eingerichtet ist, dass es durch die ersten Durchgangslöcher (14) im Abdichtungsmittel (9), in der ersten Platte (10) und in der zweiten Platte (11) verläuft,
**durch** Anpressen des Abdichtungselements (9) zwischen der ersten Platte (10) und der zweiten Platte (11) dergestalt, dass sich das Abdichtungselement (9) an das Kabel (16), Rohr oder dergleichen im ersten Durchgangsloch (14) des Abdichtungselements (9) anpresst,
**durch** Versehen der Plattenanordnung(en) (13) mit einem zweiten Durchgangsloch (15), und
**durch** Anordnen des Kabels (16), Rohres oder dergleichen, das im Kanal (5) des Kanalelements (3) so eingerichtet ist, dass es durch das zweite Durchgangsloch (15) in der/den Plattenanordnung(en) (13) verläuft.

3. Verfahren nach Anspruch 2, **gekennzeichnet**
**durch** Vorsehen des ersten Durchgangslochs (14) in der ersten Platte (10) und in der zweiten Platte (11) durch Ausbilden sowohl der ersten Platte (10) als auch der zweiten Platte (11) aus mindestens zwei ersten separaten Plattenelementen (17), die jeweils eine erste umgebende Seitenkante (18) aufweisen, so dass das erste Durchgangsloch zwischen den ersten umgebenden Seitenkanten (18) der mindestens zwei ersten separaten Plattenelemente (17) ausgebildet wird.

4. Verfahren nach Anspruch 2 oder 3, **gekennzeichnet**
**durch** Versehen des Abdichtungselements (9) mit einem Schlitz (19), der sich zwischen einer Umfangsfläche (30) des Abdichtungselements (9) und dem ersten Durchgangsloch (14) des Abdichtungselements (9) erstreckt, und
**durch** Anordnen des Kabels (16), Rohres oder dergleichen dergestalt, dass es durch das erste Durchgangsloch (14) im Abdichtungselement (9) verläuft, durch Bewegen des Abdichtungselements (9) dergestalt, dass es das Kabel (16), Rohr oder dergleichen über den Schlitz (19) umgibt.

5. Verfahren nach einem der Ansprüche 2 bis 4, **gekennzeichnet**
**durch** Vorsehen der Plattenanordnung(en) (13) dergestalt, dass sie mindestens zwei separate Plattenschichten (20) mit jeweils einem zweiten Durchgangsloch (15) umfassen,
**durch** Vorsehen des zweiten Durchgangslochs (15) in jeder der mindestens zwei separaten Plattenschichten (20) durch Ausbilden einer jeden der mindestens zwei separaten Plattenschichten (20) aus mindestens zwei zweiten separaten Plattenelementen (21) mit jeweils einer zweiten umgebenden Seitenkante (22) dergestalt, dass das zweite Durchgangsloch (15) in jeder der mindestens zwei separaten Plattenschichten (20) zwischen den zweiten umgebenden Seitenkanten (22) der mindestens zwei zweiten separaten Plattenelemente (21) ausgebildet wird, und
**durch** Anordnen der mindestens zwei separaten Plattenelemente in jeder der mindestens zwei separaten Plattenschichten (20) dergestalt, dass die zweiten umgebenden Seitenkanten (22) in angrenzenden separaten Plattenschichten (20) nicht fluchten.

6. Verfahren nach Anspruch 5, **gekennzeichnet**
**dadurch, dass** die mindestens zwei separaten Plattenschichten (20) über Befestigungsmittel wie Schrauben (27) und Muttern, die sich durch die mindestens zwei separaten Plattenschichten (20) erstrecken, aneinander befestigt werden.

7. Verfahren nach einem der Ansprüche 1 bis 6, **gekennzeichnet**
**durch** Vorsehen des Anpressmittels (12) in der Form von Kopfschrauben (28), die sich jeweils durch das Abdichtungselement (9), die erste Platte (10) und die zweite Platte (11) erstrecken, und in der Form von Muttern (29) auf Gewinden der Kopfschrauben (28), und
**durch** Anpressen des Abdichtungselements (9) mit dem Anpressmittel (12) zwischen der ersten Platte (10) und der zweiten Platte (11) dergestalt, dass sich das Abdichtungselement (9) an die Innenfläche (4) des Kanalelements (3) anpresst, durch Anpressen des Abdichtungselements (9) zwischen der ersten Platte (10) und der zweiten Platte (11) durch Anpressen des Abdichtungselements (9), der ersten Platte (10) und der zweiten Platte (11) zwischen den Köpfen der Kopfschrauben (28) und den auf die Kopfschrauben (28) aufgeschraubten Muttern (29).

8. Abdichtungsanordnung für eine explosionsbeständige Wanddurchführung (1), die sich durch eine Wand (2) eines Gebäudes erstreckt, wobei die explosionsbeständige Wanddurchführung (1) ein Kanalelement (3) mit einer Innenfläche (4) umfasst, die einen Kanal (5) begrenzt, der sich durch die explosionsbeständige Wanddurchführung (1) erstreckt,
wobei die Abdichtungsanordnung umfasst:
mindestens ein Abdichtungsmittel (8) im Kanal (5), wobei das mindestens eine Abdichtungsmittel (8) ein Abdichtungselement (9) aus elastischem Material im Kanal (5), eine dem Abdichtungselement (9) abströmseitig nachgelagerte erste Platte (10) im Kanal (5), eine dem Abdichtungselement (9) anströmseitig vorgelagerte zweite Platte (11) im Kanal (5) umfasst,
wobei das mindestens eine Abdichtungsmittel (8) ein Anpressmittel (12) umfasst, das dazu ausgelegt ist, die erste Platte (10) und die zweite Platte (11) aneinander zu pressen, so dass das Abdichtungselement (9) zwischen der ersten Platte (10) und der zweiten Platte (11) dergestalt angepresst wird, dass sich das Abdichtungselement (9) an die Innenfläche (4) des Kanalelements (3) anpresst, und
eine Plattenanordnung (13) am anströmseitigen Ende (6) des Kanals (5) des Kanalelements (3), die dazu ausgelegt ist, das anströmseitige Ende (6) des Kanals (5) des Kanalelements (3) zu verschließen, und/oder eine Plattenanordnung (13) am abströmseitigen Ende (7) des Kanals (5) des Kanalelements (3), die dazu ausgelegt ist, das abströmseitige Ende (7) des Kanals (5) des Kanalelements (3) zu verschließen,
**gekennzeichnet**
**dadurch, dass** das Kanalelement (3) am anströmseitigen Ende (6) und am abströmseitigen Ende (7) mit einem Außengewinde (23) versehen ist,
dadurch, dass eine erste Muffe (24) mit Innengewinde (25) am Außengewinde (23) am anströmseitigen Ende (6) vorgesehen ist, und eine zweite Muffe (26) mit Innengewinde (25) am Außengewinde (23) am abströmseitigen Ende (7) vorgesehen ist, und
dadurch, dass die Plattenanordnung (13) am anströmseitigen Ende (6) des Kanals (5) des Kanalelements (3) zwischen dem anströmseitigen Ende (6) des Kanals (5) des Kanalelements (3) und der ersten Muffe (24) angepresst ist, und/oder die Plattenanordnung (13) am abströmseitigen Ende (7) des Kanals (5) des Kanalelements (3) zwischen dem abströmseitigen Ende (7) des Kanals (5) des Kanalelements (3) und der zweiten Muffe (26) angepresst ist.

9. Abdichtungsanordnung nach Anspruch 8, **gekennzeichnet**
**dadurch, dass** das Abdichtungselement (9), die erste Platte (10) und die zweite Platte (11) jeweils mit einem ersten Durchgangsloch (14) versehen sind,
dadurch, dass ein im Kanal (5) des Kanalelements (3) eingerichtetes Kabel (16), Rohr oder dergleichen so angeordnet ist, dass es durch die ersten Durchgangslöcher (14) im Abdichtungsmittel (9), in der ersten Platte (10) und in der zweiten Platte (11) verläuft,
dadurch, dass das Abdichtungselement (9) zwischen der ersten Platte (10) und der zweiten Platte (11) dergestalt angepresst ist, dass das Abdichtungselement (9) an das Kabel (16), Rohr oder dergleichen im ersten Durchgangsloch (14) im Abdichtungselement (9) angepresst ist,
dadurch, dass die Plattenanordnung(en) (13) mit einem zweiten Durchgangsloch (15) versehen ist/sind, und
dadurch, dass das im Kanal (5) des Kanalelements (3) eingerichtete Kabel (16), Rohr oder dergleichen so angeordnet ist, dass es durch das zweite Durchgangsloch (15) der Plattenanordnung(en) (13) verläuft.

10. Abdichtungsanordnung nach Anspruch 9, **gekennzeichnet**
**dadurch, dass** das erste Durchgangsloch (14) in der ersten Platte (10) und in der zweiten Platte (11) sowohl in der ersten Platte (10) als auch in der zweiten Platte (11) aus mindestens zwei ersten separaten Plattenelementen (17), die jeweils eine erste umgebende Seitenkante (18) aufweisen, so ausgebildet ist, dass das erste Durchgangsloch (14) zwischen den ersten umgebenden Seitenkanten (18) der mindestens zwei ersten separaten Plattenelemente (17) ausgebildet ist.

11. Abdichtungsanordnung nach Anspruch 8 oder 9, **gekennzeichnet**
**dadurch, dass** das Abdichtungselement (9) mit einem Schlitz (19) versehen ist, der sich zwischen einer Umfangsfläche (30) des Abdichtungselements (9) und dem ersten Durchgangsloch (14) des Abdichtungselements (9) erstreckt.

12. Abdichtungsanordnung nach einem der Ansprüche 10 bis 11, **gekennzeichnet**
**dadurch, dass** die Plattenanordnung(en) (13) mindestens zwei separate Plattenschichten (20) mit jeweils einem zweiten Durchgangsloch (15) umfassen,
dadurch, dass das zweite Durchgangsloch (15) in jeder der mindestens zwei separaten Plattenschichten (20) so ausgebildet ist, dass jede der mindestens zwei separaten Plattenschichten (20) mindestens zwei zweite separate Plattenelemente (21) mit jeweils einer zweiten umgebenden Seitenkante (22) dergestalt umfasst, dass das zweite Durchgangsloch (15) in jeder der mindestens zwei separaten Plattenschichten (20) zwischen den zweiten umgebenden Seitenkanten (22) der mindestens zwei zweiten separaten Plattenelemente (21) ausgebildet ist, und
dadurch, dass die mindestens zwei separaten Plattenelemente in jeder der mindestens zwei separaten Plattenschichten (20) dergestalt angeordnet sind, dass die zweiten umgebenden Seitenkanten (22) in angrenzenden separaten Plattenschichten (20) nicht fluchten.

13. Abdichtungsanordnung nach Anspruch 12, **gekennzeichnet**
**dadurch, dass** die mindestens zwei separaten Plattenschichten (20) über Befestigungsmittel wie Schrauben und Muttern, die sich durch die mindestens zwei separaten Plattenschichten (20) erstrecken, aneinander befestigt sind.

14. Abdichtungsanordnung nach einem der Ansprüche 8 bis 13, **gekennzeichnet**
**dadurch, dass** das Anpressmittel (12) Kopfschrauben (28), die sich jeweils durch das Abdichtungselement (9), die erste Platte (10) und die zweite Platte (11) erstrecken, und Muttern (29) auf Gewinden der Kopfschrauben (28) umfasst, und
dadurch, dass sich das Abdichtungselement (9) zwischen der ersten Platte (10) und der zweiten Platte (11) befindet, so dass das Abdichtungselement (9), die erste Platte (10) und die zweite Platte (11) zwischen den Köpfen der Kopfschrauben (28) und den auf die Kopfschrauben (28) aufgeschraubten Muttern (29) angepresst ist.

## Revendications

1. Procédé étanchéification d'une traversée de paroi anti-explosion (1) s'étendant à travers une paroi (2) d'un bâtiment, dans lequel la traversée de paroi anti-explosion (1) comprend un élément de canal (3) comportant une surface intérieure (4) délimitant un canal (5) s'étendant à travers la traversée de paroi anti-explosion (1) de telle sorte que le canal (5) comporte une extrémité amont (6) et une extrémité aval (7),
le procédé comprenant les étapes consistant à
disposer au moins un moyen d'étanchéité (8) dans le canal (5), ledit au moins un moyen d'étanchéité (8) comprenant un élément d'étanchéité (9) en matériau élastique dans le canal (5), une première plaque (10) dans le canal (5) en aval de l'élément d'étanchéité (9), une deuxième plaque (11) dans le canal (5) en amont de l'élément d'étanchéité (9), et un moyen de pression (12) configuré pour presser la première plaque (10) et la deuxième plaque (11) l'une vers l'autre,
presser l'élément d'étanchéité (9) avec le moyen de pression (12) entre la première plaque (10) et la deuxième plaque (11) de telle sorte que l'élément d'étanchéité (9) soit plaqué contre la surface intérieure (4) de l'élément de canal (3), et
obturer l'extrémité amont (6) du canal (5) de l'élément de canal (3) en mettant en place un agencement de plaque (13) à l'extrémité amont (6) du canal (5) de l'élément de canal (3) et/ou obturer l'extrémité aval (7) du canal (5) de l'élément de canal (3) en mettant en place un agencement de plaque (13) à l'extrémité aval (7) du canal (5) de l'élément de canal (3),
**caractérisé par** les étapes consistant à
pourvoir l'élément de canal (3) d'un filetage extérieur (34) à l'extrémité amont (6) et à l'extrémité aval (7),
prévoir un premier raccord (24) avec un filetage intérieur (25) au niveau du filetage extérieur (23) à l'extrémité amont (6) et prévoir un deuxième raccord (26) avec un filetage intérieur (25) au niveau du filetage extérieur (23) à l'extrémité aval (7), et
mettre en place l'agencement de plaque (13) à l'extrémité amont (6) du canal (5) de l'élément de canal (3) en pressant l'agencement de plaque (13) entre l'extrémité amont (6) du canal (5) de l'élément de canal (3) et le premier raccord (24), et/ou mettre en place l'agencement de plaque (13) à l'extrémité aval (7) du canal (5) de l'élément de canal (3) en pressant l'agencement de plaque (13) entre l'extrémité aval (7) du canal (5) de l'élément de canal (3) et le deuxième raccord (26).

2. Procédé selon la revendication 1, **caractérisé par** les étapes consistant à
pourvoir chacun des élément d'étanchéité (9), première plaque (10) et deuxième plaque (11) d'un premier trou de passage (14),
disposer un câble (16), tuyau ou élément similaire agencé dans le canal (5) de l'élément de canal (3) de sorte qu'il traverse les premiers trous de passage (14) dans le moyen d'étanchéité (9), dans la première plaque (10) et dans la deuxième plaque (11),
presser l'élément d'étanchéité (9) entre la première plaque (10) et la deuxième plaque (11) de telle sorte que l'élément d'étanchéité (9) soit plaqué contre le câble (16), tuyau ou élément similaire dans le premier trou de passage (14) de l'élément d'étanchéité (9),
pourvoir le ou les agencements de plaque (13) d'un deuxième trou de passage (15), et
disposer un câble (16), tuyau ou élément similaire agencé dans le canal (5) de l'élément de canal (3) de sorte qu'il traverse le deuxième trou de passage (14) dans le ou les agencements de plaque (13).

3. Procédé selon la revendication 2, **caractérisé par** les étapes consistant à
prévoir le premier trou de passage (14) dans la première plaque (10) et dans la deuxième plaque (11) en formant tant la première plaque (10) que la deuxième plaque (11) à partir d'au moins deux premiers éléments de plaque séparés (17) comportant chacun un premier bord latéral périphérique (18) de sorte que le premier trou de passage soit formé entre les premiers bords latéraux périphériques (18) desdits au moins deux premiers éléments de plaque séparés (17).

4. Procédé selon la revendication 2 ou 3, **caractérisé par** les étapes consistant à
pourvoir l'élément d'étanchéité (9) d'une fente (19) qui s'étend entre une surface circonférentielle (30) de l'élément d'étanchéité (9) et le premier trou de passage (14) de l'élément d'étanchéité (9), et
disposer le câble (16), tuyau ou élément similaire de sorte qu'il traverse le premier trou de passage (14) dans l'élément d'étanchéité (9) en déplaçant l'élément d'étanchéité (9) de sorte qu'il entoure le câble (16), tuyau ou élément similaire via la fente (19).

5. Procédé selon l'une quelconque des revendications 2 à 4, **caractérisé par** les étapes consistant à
prévoir le ou les agencements de plaque (13) de sorte qu'il(s) comprenne(nt) au moins deux couches de plaque séparées (20) comportant chacune un deuxième trou de passage (15),
prévoir le deuxième trou de passage (15) dans chacune desdites au moins deux couches de plaque séparées (20) en formant chacune desdites au moins deux couches de plaque séparées (20) à partir d'au moins deux deuxièmes éléments de plaque séparés (21) comportant chacun un deuxième bord latéral périphérique (22) de telle sorte que le deuxième trou de passage (15) soit, dans chacune desdites au moins deux couches de plaque séparées (20), formé entre les deuxièmes bords latéraux périphériques (22) desdits au moins deux deuxièmes éléments de plaque séparés (21), et
disposer lesdits au moins deux éléments de plaque séparés dans chacune desdites au moins deux couches de plaque séparées (20) de telle sorte que les deuxièmes bords latéraux périphériques (22) dans des couches de plaque séparées adjacentes (20) ne soient pas alignés.

6. Procédé selon la revendication 5, **caractérisé par** l'étape consistant à
fixer lesdites au moins deux couches de plaque séparées (20) l'une à l'autre par des moyens de fixation tels que des boulons (27) et écrous s'étendant à travers lesdites aux moins deux couches de plaque séparées (20).

7. Procédé selon l'une quelconque des revendications 1 à 6, **caractérisé par** les étapes consistant à
prévoir le moyen de pression (12) sous forme de boulons à tête (28) traversant chacun l'élément d'étanchéité (9), la première plaque (10) et la deuxième plaque (11) et sous forme d'écrous (29) sur les filetages des boulons à tête (28), et
presser l'élément d'étanchéité (9) avec le moyen de pression (12) entre la première plaque (10) et la deuxième plaque (11) de telle sorte que l'élément d'étanchéité (9) soit plaqué contre la surface intérieure (4) de l'élément de canal (3) en pressant l'élément d'étanchéité (9) entre la première plaque (10) et la deuxième plaque (11) en pressant l'élément d'étanchéité (9), la première plaque (10) et la deuxième plaque (11) entre les têtes des boulons à tête (28) et les écrous (29) vissés sur les boulons à tête (28).

8. Agencement d'étanchéité pour une traversée de paroi anti-explosion (1) s'étendant à travers une paroi (2) d'un bâtiment, dans lequel la traversée de paroi anti-explosion (1) comprend un élément de canal (3) comportant une surface intérieure (4) délimitant un canal (5) s'étendant à travers la traversée de paroi anti-explosion (1),
ledit agencement d'étanchéité comprenant
au moins un moyen d'étanchéité (8) dans le canal (5), ledit au moins un moyen d'étanchéité (8) comprenant un élément d'étanchéité (9) en matériau élastique dans le canal (5), une première plaque (10) dans le canal (5) en aval de l'élément d'étanchéité (9), une deuxième plaque (11) dans le canal (5) en amont de l'élément d'étanchéité (9),
ledit au moins un moyen d'étanchéité (8) comprenant un moyen de pression (12) configuré pour presser la première plaque (10) et la deuxième plaque (11) l'une vers l'autre de manière à presser l'élément d'étanchéité (9) entre la première plaque (10) et la deuxième plaque (11) de telle sorte que l'élément d'étanchéité (9) soit plaqué contre la surface intérieure (4) de l'élément de canal (3), et
un agencement de plaque (13) à l'extrémité amont (6) du canal (5) de l'élément de canal (3) configuré pour obturer l'extrémité amont (6) du canal (5) de l'élément de canal (3), et/ou un agencement de plaque (13) à l'extrémité aval (7) du canal (5) de l'élément de canal (3) configuré pour obturer l'extrémité aval (7) du canal (5) de l'élément de canal (3),
**caractérisé**
**en ce que** l'élément de canal (3) est pourvu d'un filetage extérieur (23) à l'extrémité amont (6) et à l'extrémité aval (7),
**en ce qu'**un premier raccord (24) avec un filetage intérieur (25) est prévu au niveau du filetage extérieur (23) à l'extrémité amont (6) et un deuxième raccord (26) avec un filetage intérieur (25) est prévu au niveau du filetage extérieur (23) à l'extrémité aval (7), et
**en ce que** l'agencement de plaque (13) à l'extrémité amont (6) du canal (5) de l'élément de canal (3) est pressé entre l'extrémité amont (6) du canal (5) de l'élément de canal (3) et le premier raccord (24) et/ou l'agencement de plaque (13) à l'extrémité aval (7) du canal (5) de l'élément de canal (3) est pressé entre l'extrémité aval (7) du canal (5) de l'élément de canal (3) et le deuxième raccord (26).

9. Agencement d'étanchéité selon la revendication 8, **caractérisé**
**en ce que** chacun des élément d'étanchéité (9), première plaque (10) et deuxième plaque (11) est pourvu d'un premier trou de passage (14),
**en ce qu'**un câble (16), tuyau ou élément similaire agencé dans le canal (5) de l'élément de canal (3) est disposé de manière à traverser les premiers trous de passage (14) dans le moyen d'étanchéité (9), dans la première plaque (10) et dans la deuxième plaque (11),
**en ce que** l'élément d'étanchéité (9) est pressé entre la première plaque (10) et la deuxième plaque (11) de telle sorte que l'élément d'étanchéité (9) soit plaqué contre le câble (16), tuyau ou élément similaire dans le premier trou de passage (14) de l'élément d'étanchéité (9),
**en ce que** le ou les agencements de plaque (13) sont pourvus d'un deuxième trou de passage (15), et
**en ce que** le câble (16), tuyau ou élément similaire agencé dans le canal (5) de l'élément de canal (3) est disposé de manière à traverser le deuxième trou de passage (15) dans le ou les agencements de passage (13).

10. Agencement d'étanchéité selon la revendication 9, **caractérisé**
**en ce que** le premier trou de passage (14) dans la première plaque (10) et dans la deuxième plaque (11) est formé, tant dans la première plaque (10) que dans la deuxième plaque (11), à partir d'au moins deux premiers éléments de plaque séparés (17) comportant chacun un premier bord latéral périphérique (18) de sorte que le premier trou de passage (14) est formé entre les premiers bords latéraux périphériques (18) desdits au moins deux premiers éléments de plaque séparés (17).

11. Agencement d'étanchéité selon la revendication 8 ou 9, **caractérisé**
**en ce que** l'élément d'étanchéité (9) est pourvu d'une fente (19) qui s'étend entre une surface circonférentielle (30) de l'élément d'étanchéité (9) et le premier trou de passage (14) de l'élément d'étanchéité (9).

12. Agencement d'étanchéité selon l'une des revendications 10 à 11, **caractérisé**
**en ce que** le ou les agencements de plaque (13) comprennent au moins deux couches de plaque séparées (20) comportant chacune un deuxième trou de passage (15),
**en ce que** le deuxième trou de passage (15) dans chacune desdites au moins deux couches de plaque séparées (20) est formé de telle sorte que chacune desdites au moins deux couches de plaque séparées (20) comprend au moins deux deuxièmes éléments de plaque séparés (21) comportant chacun un deuxième bord latéral périphérique (22) de sorte que le deuxième trou de passage (15) est, dans chacune desdites au moins deux couches de plaque séparées (20), formé entre les deuxièmes bords latéraux périphériques (22) desdits au moins deux deuxièmes éléments de plaque séparés (21), et
**en ce que** lesdits au moins deux éléments de plaque séparés sont disposés dans chacune desdites au moins deux couches de plaque séparées (20) de telle sorte que les deuxièmes bords latéraux périphériques (22) dans des couches de plaque séparées adjacentes (20) ne sont pas alignés.

13. Agencement d'étanchéité selon la revendication 12, **caractérisé**
**en ce que** lesdites au moins deux couches de plaque séparées (20) sont fixées l'une à l'autre par des moyens de fixation tels que des boulons et écrous s'étendant à travers lesdites aux moins deux couches de plaque séparées (20).

14. Agencement d'étanchéité selon l'une des revendications 8 à 13, **caractérisé**
**en ce que** le moyen de pression (12) comprend des boulons à tête (28) traversant chacun l'élément d'étanchéité (9), la première plaque (10) et la deuxième plaque (11) et des écrous (29) sur les filetages des boulons à tête (28), et
**en ce que** l'élément d'étanchéité (9) est situé entre la première plaque (10) et la deuxième plaque (11) de telle sorte que l'élément d'étanchéité (9), la première plaque (10) et la deuxième plaque (11) sont pressés entre les têtes des boulons à tête (28) et les écrous (29) vissés sur les boulons à tête (28).
